# EUROPÄISCHE PATENTSCHRIFT

(11) **EP 2 383 532 B1**
(45) Veröffentlichungstag und Bekanntmachung des Hinweises auf die Patenterteilung: **11.05.2016**
(21) Anmeldenummer: 11159830.6
(22) Anmeldetag: 25.03.2011
(51) Int. Cl.: F27D 1/00, F27D 1/12, F27D 1/14, F22B 37/10, F27D 1/16

(54) **Korrosionsschutzkörper und Schutzsystem für eine Ofeninnenwand**
Anti-corrosion body and protection system for an internal wall of a furnace
Corps de protection contre la corrosion et système de protection pour une paroi interne de four

(30) Priorität: 28.04.2010 DE 102010018648
(43) Veröffentlichungstag der Anmeldung: 02.11.2011
(73) Patentinhaber: Saint-Gobain Industriekeramik Düsseldorf GmbH, 40597 Düsseldorf (DE)
(72) Erfinder: Schlax, Jürgen, 40549, Düsseldorf (DE)
(74) Vertreter: Cohausz & Florack

(56) Entgegenhaltungen:
- WO-A1-2005/064255
- DE-A1- 3 806 044
- DE-U1- 9 107 273
- FR-A- 1 401 132

## Beschreibung

Die Erfindung betrifft einen Korrosionsschutzkörper für ein Schutzsystem für eine Ofeninnenwand umfassend einen Grundkörper mit einer den Ofeninnenraum zuwendbaren Vorderseite, einer Rückseite und die Vorderseite mit der Rückseite verbindenden Randseiten. Ferner betrifft die Erfindung ein Schutzsystem für eine Ofeninnenwand sowie einen geschützten Wandabschnitt einer Ofeninnenwand mit einem solchen Schutzsystem.

Korrosionsschutzkörper für Ofeninnenwände der eingangs genannten Art, die auch regelmäßig die Funktion eines Überhitzungsschutzes für die Ofeninnenwände übernehmen, sowie aus derartigen Korrosionsschutzkörpern aufgebaute Schutzsysteme für Ofeninnenwände sind aus dem Stand der Technik, zB. DE 3806044 A1, seit langem bekannt. Sie dienen allgemein dem Schutz der Innenwände industrieller Feuerungsöfen, beispielsweise in Müllverbrennungsanlagen, vor den bei der Verbrennung entstehenden sehr heißen und korrosiv wirkenden Verbrennungsgasen.

Bei einem aus der Praxis bekannten Wandschutz ist die Ofeninnenwand als Kesselrohrwand ausgebildet und durch Rohrschutzplatten verkleidet. Die Rohrschutzplatten werden dabei durch von der Kesselrohrwand abstehende, an die Wand angeschweißte Hakenelemente, die in entsprechende in die Rückseite der Rohrschutzplatten eingeformte Ausnehmungen oder Nuten eingreifen, einzeln gehalten. Der spaltartige Zwischenraum zwischen der Kesselrohrwand und den Rohrschutzplatten ist dabei mit einer keramischmonolithischen Füllmasse in Form von Mörtel oder Beton gefüllt. Eine andere Variante sieht vor, dass ein Füllen des zwischen den Rohrschutzplatten und der schützenden Kesselrohrwand gebildeten Spalts unterbleibt und er stattdessen im Betrieb des Ofens kontinuierlich von einem Luftstrom durchströmt wird ("hinterlüftetes System").

Die Korrosionsschutzplatten selbst sind aus silikatisch gebundenem Siliziumcarbit oder nitridgebundenem Siliziumcarbid (NSiC) gefertigt. Bei den letzt genannten Materialien handelt es sich um offenporige Siliziumcarbidkeramiken. Diese halben den spezifischen Vorteil einer vergleichsweise hohen mechanischen Belastbarkeit, da diese speziellen Keramiken ein vergleichsweise geringes Maß an Sprödigkeit aufweisen. Dementsprechend halten aus offenporigen Siliziumcarbidkeramiken, insbesondere aus nitridgebundenem Siliziumcarbid, gefertigte Korrosionsschutzplatten, die zur Ausbildung eines Wandschutzes an einer Kesselrohrwand eingehängt sind, den in dem keramischen Material auftretenden mechanischen Spannungen infolge unterschiedlicher thermischer Ausdehnungskoeffizienten von Keramik und metallischer Rohrwand vergleichsweise problemlos stand. Die Porosität des Keramikmaterials hat jedoch den entscheidenden Nachteil, dass die in der Verbrennung im Ofen entstehenden Schadgase durch die Poren des Keramikmaterials hindurch dringen und dabei sowohl die Korrosionsschutzplatte als auch die dahinter angeordnete Wand schädigen.

Ferner sind aus der Praxis Versuche mit Körrosionsschutzplatten durchgeführt worden, bei denen die Platten aus einer dichten Siliziumcarbidkeramik, beispielsweise reaktionsgebundenem, siliziuminfiltriertem Siliziumcarbid (SiSiC), gefertigt sind. Aufgrund der hohen Dichtigkeit und entsprechend minimalen Porosität der Oberflächen besteht hier nicht die Gefahr, dass Schadgase in und durch die einzelnen Korrosionsschutzplatten dringen, jedoch weisen die aus dem dichten Keramikmaterial gefertigten Korrosionsschutzplatten eine sehr hohe Sprödigkeit auf. Dies führt zu einer verstärkten Riss- und Splitterbildung bei auftretenden mechanischen Spannungen, was vielfach zu einer Zerstörung des Schutzsystems führt.

Hiervon ausgehend liegt der Erfindung die Aufgabe zugrunde, einen Korrosionsschutzkörper für ein Schutzsystem für eine Ofeninnenwand anzugeben, welche einerseits eine hohe Widerstandsfähigkeit gegenüber den korrosiven Verbrennungsgasen des Ofens aufweist und andererseits sich durch eine hohe mechanische Stabilität und Temperaturwechselbeständigkeit auszeichnet.

Die Aufgabe wird erfindungsgemäß mit einem Korrosionsschutzkörper für ein Schutzsystem für eine Ofeninnenwand nach dem Oberbegriff des Patentanspruches 1 dadurch gelöst, dass der Korrosionsschutzkörper einen aus einem ersten keramischen Material gefertigten Grundkörper umfasst, wobei an der Vorderseite des Grundkörpers eine Schicht eines zweiten keramischen Materials angeordnet ist, wobei das zweite keramische Material der Schicht eine geringere Porosität aufweist als das erste keramische Material des Grundkörpers.

Der besondere Vorteil des erfindungsgemäßen Korrosionsschutzkörpers liegt darin, dass die spezifischen Vorteile eines offenporigen Keramikmaterials mit denen eines dichten Keramikmaterials optimal verbunden werden. Da der die mechanischen Eigenschaften und die Temperaturwechselbeständigkeit des Korrosionsschutzkörpers dominierende Grundkörper aus dem poröseren ersten keramischen Materials gefertigt ist, weist der Korrosionsschutzkörper insgesamt eine hohe mechanische Stabilität auch bei stark wechselnden Temperaturen und damit einhergehenden thermischen Spannungen auf. Damit ist eine hohe Lebensdauer des Korrosionsschutzkörpers auch bei andauernder mechanischer Belastung sichergestellt. Durch das Ausbilden einer dichten Schicht aus dem zweiten weniger porösen keramischen Material auf der Vorderseite des Grundkörpers ist zudem gewährleistet, dass praktisch keine aggressiven Rauchgase aus der Ofenfeuerung in den Korrosionsschutzkörper eindringen und diesen beschädigen können. Damit im Zusammenhang ist auch sichergestellt, dass keine aggressiven Gase den Korrosionsschutzkörper durchdringen und die zu schützende Ofeninnenwand auf der Rückseite beschädigen. Die aus dem zweiten keramischen Material geringerer Porosität gebildete Schicht auf der Vorderseite des Grundkörpers bildet somit gleichsam eine Sperre für aggressive und korrosiv wirkende Schadgase.

Da das dichtere zweite keramische Material lediglich als Schicht auf der. Vorderseite des aus dem ersten keramischen Material gefertigten Grundkörpers vorgesehen ist, werden dessen vorteilhafte mechanische Eigenschaften und damit die mechanischen Eigenschaften des Korrosionsschutzkörpers insgesamt durch das erste keramische Material in dominiert. Dies gilt insbesondere dann, wenn die Dicke der Schicht deutlich kleiner ist als die Dicke des Grundkörpers. Ein geeignetes Verhältnis der Dicke der Schicht zur Dicke des Grundkörpers beträgt 1:5 bis 1:10, insbesondere 1:7.

Nach einer weiteren Ausgestaltung der Erfindung enthält das erste keramische Material eine offenporige Siliziumcarbidkeramik, insbesondere silikatisch gebundenes Siliziumcarbid, rekristallisiertes Siliziumcarbid (RSiC) oder nitrid- bzw. oxynitridgebundenes Siliziumcarbid (NSiC). Offenporige Siliziumcarbidkeramiken zeichnen sich durch eine besonders hohe Widerstandsfähigkeit gegenüber mechanischen Spannungen und durch ein vorteilhaftes Rissverhalten aus. Sie sind daher insbesondere als keramisches Material für den Grundkörper des Korrosionsschutzkörpers geeignet.

Nach einer weiteren Ausgestaltung der Erfindung enthält das zweite keramische Material eine dichte Siliziumcarbidkeramik, insbesondere reaktionsgebundenes, siliziuminfiltriertes Siliziumcarbid (SiSiC), gesintertes Siliziumcarbid (SSiC) oder heiß (isostatisch) gepresstes Siliziumcarbid (HpSiC, HipSiC). Dichte Siliziumcarbidkeramiken weisen zwar eine starke Sprödigkeit auf, weshalb sie sich nur sehr begrenzt als Grundmaterial als Korrosionsschutzkörper eignen, bilden jedoch aufgrund ihrer sehr dichten Oberfläche eine sehr wirkungsvolle Sperre gegen in den Korrosionsschutzkörper eindringende Schadgase.

Nach einer weiteren vorteilhaften Ausgestaltung der Erfindung ist der Grundkörper des Korrosionsschutzkörpers plattenförmig ausgebildet. Bildet er ein Schutzsystem für beispielsweise eine Kesselrohrwand, so kann weiter vorgesehen sein, dass seine Rückseite an die Kontur der Kesselrohrwand angepasst ausgebildet ist.

Nach einer weiteren vorteilhaften Ausgestaltung der Erfindung ist die vorderseitig angeordnete Schicht aus dem zweiten keramischen Material als separates plattenförmiges Bauteil ausgebildet und liegt an dem Grundkörper an dessen Vorderseite an. Hierdurch ist es möglich den Grundkörper und die plattenförmige Schicht als separate Bauteile - ggf. in entsprechend separaten Herstellungsprozessen - zu fertigen und anschließend miteinander zu verbinden.

Um einen guten Wärmeübergang zwischen der plattenförmigen Schicht aus dem zweiten keramischen Material und dem aus dem ersten keramischen Material gefertigten Grundkörper sicherzustellen ist nach einer weiteren Ausgestaltung vorgesehen, dass das die schichtbildende plattenförmige Bauteil im wesentlichen formschlüssig an dem Grundkörper anliegt.

Um eine verbesserte mechanische Verbindung zwischen Grundkörper und pattenförmigen Bauteil zu erreichen, kann zudem vorgesehen sein, dass eine spezielle formschlüssige Verbindung zwischen plattenförmigen Bauteil und Grundkörper, beispielsweise in Form einer Nut-Feder-Verbindung oder einer Verzahnung, vorgesehen ist.

Ferner kann vorgesehen sein, dass das die Schicht bildende plattenförmige Bauteil und der Grundkörper mittels eines Mörtels, insbesondere eines Siliziumcarbidmörtels, verbunden sind. Nach einer besonders vorteilhaften Ausgestaltung der Erfindung ragt das die Schicht bildende plattenförmige Bauteil zumindest teilweise über die seitlichen Ränder des Grundkörpers hinaus. Dies ist insbesondere dann von Vorteil, wenn ein Schutzsystem für eine Ofeninnenwand aus einer Vielzahl Schachbrett- oder wabenförmig angeordneter Korrosionsschutzkörper gebildet wird, bei denen die Fugen zwischen benachbart positionierten Korrosionsschutzkörpern über die zumindest teilweise hinausragende plattenförmige Schicht entsprechend geschlossen werden können, sodass auch hier keine Eintrittspforte für Schadgase besteht und ein verbesserter Wandschutz realisiert ist.

Nach einer weiteren Ausgestaltung der Erfindung weist die Rückseite des Grundkörpers Mittel zur Verbindung des Korrosionsschutzkörpers mit der Ofeninnenwand, insbesondere mit einer Kesselrohrwand auf. Diese Mittel können als wenigstens eine Ausnehmung zur Aufnahme eines von der Ofeninnenwand abstehenden Hakenelements, insbesondere als eine an einer Randseite des Grundkörpers endenden Nut, speziell als T-Nut, ausgebildet sein.

Alternativ können die Mittel als wenigstens ein von der Rückseite des Grundkörpers des Korrosionsschutzkörpers abstehendes Hakenelement ausgebildet sein.

Nach einer weiteren Ausgestaltung der Erfindung sind die Mittel zur Verbindung des Korrosionsschutzkörpers mit der Ofeninnenwand, beispielsweise also einer Ausnehmung für ein Hakenelement oder ein Hakenelement selbst, und die spezielle formschlüssige Verbindung zwischen dem die Schicht bildenden plattenförmigen Bauteil und dem Grundkörper (z.B. Nut-Feder oder Verzahnung) seitlich zueinander versetzt angeordnet. Hierdurch wird sichergestellt, dass keine übermäßigen Spannungen zwischen dem die Schicht bildenden plattenförmigen Element und dem Grundkörper ausgebaut werden.

Ein weiterer Aspekt der vorliegenden Erfindung betrifft ein Schutzsystem für eine Ofeninnenwand, insbesondere für eine Kesselrohrwand, mit wenigstens einem Korrosionsschutzkörper nach einem der Ansprüche 1 bis 13.

Für die Vorteile des erfindungsgemäßen Schutzsystems gilt das Vorstehende entsprechend.

Das Schutzsystem selbst kann derart ausgestaltet sein, dass die vor der Ofeninnenwand angeordneten Korrosionsschutzköper hinterlüftet sind, an der Ofeninnenwand vermörtelt sind oder hintergossen sind.

Ein weiterer Aspekt der Erfindung betrifft einen geschützten Wandabschnitt einer Ofeninnenwand, insbesondere einer Kesselrohrwand, mit einem Schutzsystem nach einem der Ansprüche 14 bis 17.

Im Folgenden wird die Erfindung anhand einer ein Ausführungsbeispiel darstellenden Zeichnung näher erläutert.

Es zeigen:
- Fig. 1: ein Schutzsystem für eine Kesselrohrwand, bei dem die Kesselrohrwand teilweise mit Korrosionsschutzkörpern ausgekleidet ist, in perspektivischer Ansicht,
- Fig. 2: ein Korrosionsschutzkörper des Schutzsystems der Fig. 1 in perspektivischer Ansicht,
- Fig. 3: ein Vertikalschnitt durch den Korrosionsschutzkörper aus Fig. 2 gemäß Schnittlinie III-III aus Fig. 2 und
- Fig. 4: vier zueinander benachbart angeordnete Korrosionsschutzkörper in Draufsicht.

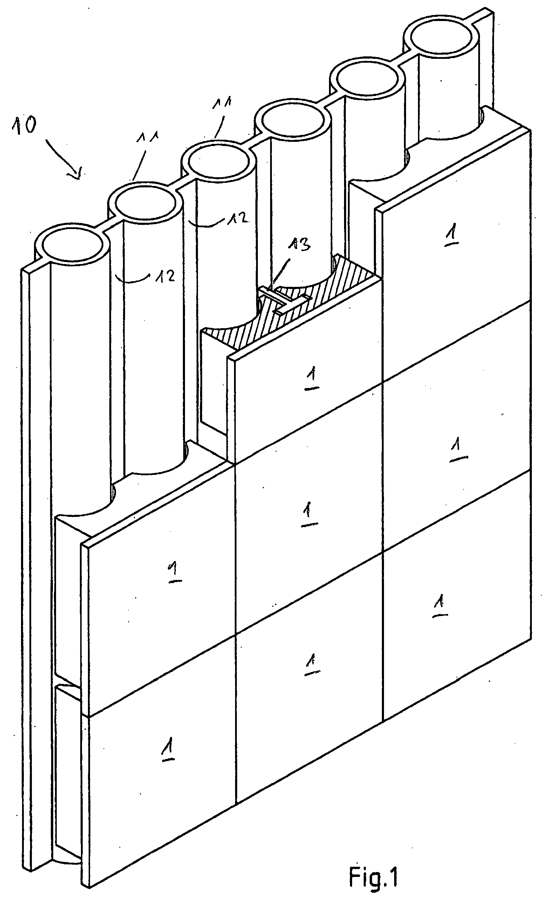

In Fig. 1 ist ein aus einer Mehrzahl von Korrosionsschutzkörpern 1 zusammengesetztes Schutzsystem für eine Kesselrohrwand 10 des Feuerungsraums, beispielsweise in einer Müllverbrennungsanlage, dargestellt. Die in der Praxis vollständige Auskleidung der Kesselrohrwand 1 ist vorliegend aus Gründen der Übersichtlichkeit nur teilweise dargestellt. Die Kesselrohrwand 10 selbst besteht aus einer Mehrzahl paralleler Rohre 11, die von.einem Wärmeträgermedium, beispielsweise Wasser, Dampf oder Thermalöl durchströmt werden, und die Rohre 11 paarweise Stegartig verbindenden Rohrflossen 12. Die Korrosionsschutzkörper 1 sind, wie in der teilweise geschnittenen Ansicht eines der Korrosionsschutzkörper 1 in Figur 1 dargestellt, jeweils über an die Rohrflossen 12 angeschweißte T-förmige Halteelemente 13 an der Kesselrohrwand verankert.

Jeder Korrosionsschutzkörper 1 des Schutzsystems aus Fig. 1 ist im Wesentlichen als quaderförmige Platte ausgebildet mit einer dem Ofeninnenraum zugewandten Vorderseite 1a, einer der Vorderseite 1a gegenüberliegenden, entsprechend der Kesselrohrwand 10 zugewandten Rückseite 1b sowie die Vorderseite 1a mit der Rückseite 1b verbindenden, vorliegend senkrecht zu diesen stehenden Randseiten 1c, 1d, 1e, 1f. Neben einfachen Platten rechteckigen Querschnitts sind ebenso weitere Geometrien möglich, so zum Beispiel regelmäßige Sechsecke, durch welche die Wand wabenartig ausgekleidet werden kann.

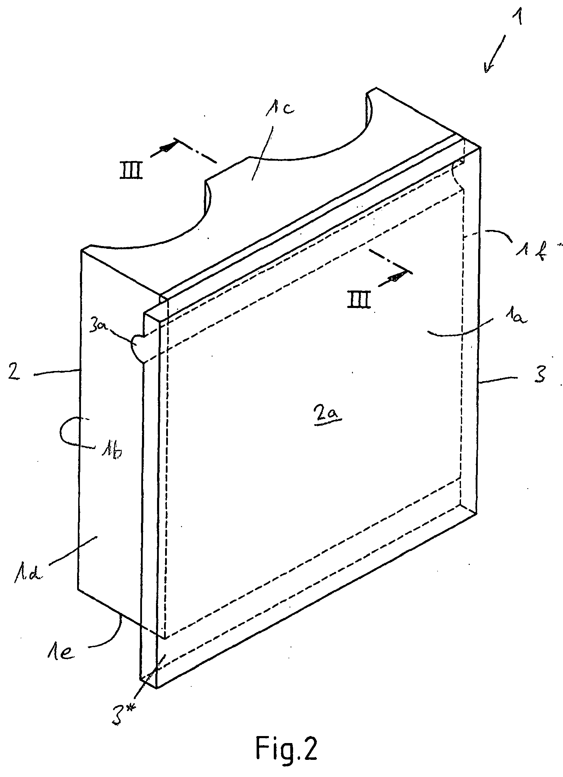

Der Hitzeschutzkörper 1 umfasst,, wie in Fig. 2 erkennbar, einen Grundkörper 2 aus einem ersten keramischen Material an dessen dem Ofeninnenraum zugewandter Vorderseite eine Schicht aus einem zweiten keramischen Material angeordnet ist. Vorliegend wird die Schicht durch ein separates im Vergleich zum Grundkörper 2 dünn ausgebildetes, plattenförmiges Bauteil ("Platte") 3 gebildet, welches formschlüssig an der Vorderseite des Grundkörpers 2 anliegt. Dabei ist die Dicke der Platte 3 wesentlich geringer als die Dicke des Grundkörpers 2. Ein geeignetes Verhältnis zwischen der Dicke der Schicht und der Dicke des Grundkörpers ist insbesondere 1:5 bis 1:10, insbesondere 1:7. Der Grundkörper 2 ist aus einem ersten keramischen Material gefertigt, während die vorderseitig angeordnete Platte 3 aus einem von dem ersten keramischen Material zu unterscheidenden zweiten keramischen Material gefertigt ist, wobei das zweite keramische Material eine geringere Porosität aufweist als das erste keramische Material.

Vorliegend wird das erste keramische Material des Grundkörpers 3 durch eine offenporige Siliziumcarbidkeramik, bevorzugt nitridgebundenes Siliziumcarbid (NSiC), gebildet, während das zweite keramische Material des vorderseitig angeordneten, plattenförmigen Bauteils 3 durch eine dichte Siliziumcarbidkeramik, bevorzugt reaktionsgebundenes, siliziuminfiltriertes Siliziumcarbid (SiSiC), gebildet wird. Hierdurch ist gewährleistet, dass die mechanischen Eigenschaften des Grundkörpers 2 und somit des Korrosionsschutzkörpers 1 insgesamt durch die vorteilhaften mechanischen Eigenschaften des ersten keramischen Materials, nämlich des nitridgebundenen Siliziumcarbids, dominiert werden, während durch das zweite keramische Material, nämlich das reaktionsgebundene, siliziuminfiltriertes Siliziumcarbid, eine wirksame Sperre gegen eindringende Schadgase der Ofenfeuerung bereitgestellt wird. Die teilweise nachteiligen mechanischen Eigenschaften dieses dichten keramischen Materials, wie beispielsweise seine begrenzte Formbarkeit und nachteiliges Riss- und Splitterverhalten unter mechanischer Belastung, fallen aufgrund der geringen Dicke der Platte nicht ernsthaft ins Gewicht.

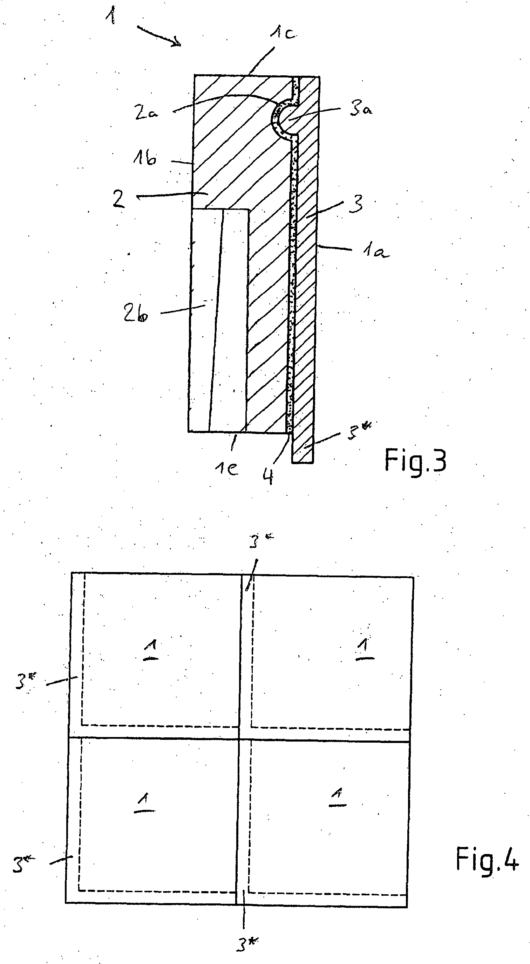

Wie insbesondere der Fig. 3 zu entnehmen ist, sind der Grundkörper 2 und die vorderseitige Platte 3 über eine Siliziumcarbid enthaltende Mörtelschicht 4 miteinander verbunden. Ferner weist der Grundkörper 2 eine horizontal ausgerichtete Nut 2a auf, in welcher eine entsprechend geformte und an der Rückseite der Platte 3 ausgebildete Feder 3a eingereift, sodass die Platte auch mechanisch gegen ein Herabfallen vom Grundkörper 2 gesichert ist.

Ferner weist der Grundkörper 2 an seiner der Kesselrohrwand 10 zugewandten Rückseite 1b zwei zylindrische Ausrundüngen auf, wodurch er an die Kontur der Kesselrohrwand 10 angepasst ist, sodass ein verbesserter Wärmeübergang auf das die Rohre 11 durchströmende Wärmeträgermedium ermöglicht wird.

In die Rückseite 1b des Grundkörpers 2 ist eine Nut 2b mit T-förmigen Profil eingeformt, welche an einer Randseite 1e endet, sodass, wie im Zusammenhang mit Fig. 1 bereits erwähnt, der Korrosionsschutzkörper 1 insgesamt an einem entsprechenden T-förmigen Hakenelement 13 eingehängt werden kann. Alternativ kann an der Rückseite 1b des Grundkörpers 2 selbst ein Hakenelement vorgesehen sein (nicht dargestellt), welches seinerseits beispielsweise in einen auf die Kesselrohrwand 10 aufgebrachte Mörtelschicht eingedrückt werden kann.

Wie den Fig. 2 und 3 ferner zu entnehmen ist, überragt die Platte 3 den Grundkörpern an 2 Randseiten, wobei entsprechende Überstände 3* gebildet sind. Hierdurch wird eine fugenfreie Bedeckung der zu schützenden Kesselrohrwand 10 durch die Hitzeschutzkörper 1 sichergestellt, wie in Fig. 4 erkennbar.

## Patentansprüche

1. Korrosionsschutzkörper (1) für ein Schutzsystem für eine Ofeninnenwand (10) mit einer dem Ofeninnenraum zuwendbaren Vorderseite (1a), einer Rückseite (1b) und die Vorderseite (1a) mit der Rückseite (1b) verbindenden Randseiten (1c, 1d, 1e, 1f),
wobei der Korrosionsschutzkörper (1) einen aus einem ersten keramischen Material gefertigten Grundkörper (2) umfasst, wobei an der Vorderseite des Grundkörpers (2) eine Schicht (3) eines zweiten keramischen Materials angeordnet ist, wobei das zweite keramische Material der Schicht (3) eine geringere Porosität aufweist als das erste keramische Material des Grundkörpers (2),
**dadurch gekennzeichnet, dass**
das Verhältnis der Dicke der Schicht (3) zu der Dicke des Grundkörpers (2) 1:5 bis 1:10 beträgt.

2. Korrosionsschutzkörper (1) nach Anspruch 1,
**dadurch gekennzeichnet, dass**
das Verhältnis der Dicke der Schicht (3) zu der Dicke des Grundkörpers (2) 1:7 beträgt.

3. Korrosionsschutzkörper (1) nach Anspruch 1 oder 2,
**dadurch gekennzeichnet, dass**
das erste keramische Material eine offenporige Siliziumcarbidkeramik, insbesondere silikatisch gebundenes Siliziumcarbid, rekristallisiertes Siliziumcarbid (RSiC) oder nitrid- bzw. oxynitridgebundenes Siliziumcarbid (NSiC), enthält,
und/oder
das zweite keramische Material eine dichte Siliziumcarbidkeramik, insbesondere reaktionsgebundenes, siliziuminfiltriertes Siliziumcarbid (SiSiC), gesintertes Siliziumcarbid (SSiC) oder heiß (isostatisch) gepresstes Siliziumcarbid (HpSiC, HipSiC), enthält

4. Korrosionsschutzkörper (1) nach einem der Ansprüche 1 bis 3,
**dadurch gekennzeichnet, dass**
der Grundkörper (2) des Korrosionsschutzkörpers (1) plattenförmig ausgebildet ist.

5. Korrosionsschutzkörper (1) nach einem der Ansprüche 1 bis 4,
**dadurch gekennzeichnet, dass**
die vorderseitig angeordnete Schicht (3) aus dem zweiten keramischen Material als separates plattenförmiges Bauteil (3) ausgebildet ist und an dem Grundkörper (2) anliegt.

6. Korrosionsschutzkörper (1) nach Anspruch 5,
**dadurch gekennzeichnet, dass**
das zwischen dem die Schicht bildenden plattenförmigen Bauteil (3) und dem Grundkörper (2) eine formschlüssige Verbindung, insbesondere eine Nut-Feder-Verbindung (2a, 3a) oder eine Verzahlung, vorgesehen ist.

7. Korrosionsschutzkörper (1) nach Anspruch 5 oder 6,
**dadurch gekennzeichnet, dass**
das die Schicht bildende plattenförmige Bauteil (3) und der Grundkörper (2) mittels eines Mörtels, insbesondere eines Siliziumkarbid-Mörtels (4), verbunden sind.

8. Korrosionsschutzkörper (1) nach einem der Ansprüche 5 bis 7,
**dadurch gekennzeichnet, dass**
das die Schicht bildende plattenförmige Bauteil (3) zumindest teilweise über die seitlichen Ränder des Grundkörpers (2) hinausragt.

9. Korrosionsschutzkörper (1) nach einem der Ansprüche 1 bis 8,
**dadurch gekennzeichnet, dass**
die Rückseite Mittel (2b) zur Verbindung des Korrosionsschutzkörpers (1) mit der Ofeninnenwand, insbesondere mit einer Kesselrohrwand (10), aufweist.

10. Korrosionsschutzkörper (1) nach Anspruch 9,
**dadurch gekennzeichnet, dass**
die Mittel als wenigstens eine Ausnehmung (2b) zur Aufnahme eines von der Ofeninnenwand abstehenden Hakenelements, insbesondere als eine an einer Randseite des Grundkörpers endende Nut, speziell als T-Nut (2b), ausgebildet sind,
oder
die Mittel als wenigstens ein von der Rückseite abstehendes Hakenelement ausgebildet sind.

11. Korrosionsschutzkörper (1) nach Anspruch 6 und Anspruch 10,
**dadurch gekennzeichnet, dass**
die Mittel (2b) zur Verbindung des Korrosionsschutzkörpers (1) mit der Ofeninnenwand (10) und die formschlüssige Verbindung (2a, 3a) zwischen dem die Schicht bildenden plattenförmigen Bauteil (3) und dem Grundkörper (2) seitlich zueinander versetzt angeordnet sind.

12. Schutzsystem für eine Ofeninnenwand, insbesondere für eine Kesselrohrwand (10), mit wenigstens einem Korrosionsschutzkörper (1) nach einem der Ansprüche 1 bis 11.

13. Schutzsystem nach Anspruch 12,
**dadurch gekennzeichnet, dass**
der Korrosionsschutzkörper (1) hinterlüftet ist,
oder
der Korrosionsschutzkörper (1) an der Ofeninnenwand vermörtelt ist.

14. Schutzsystem nach Anspruch 12,
**dadurch gekennzeichnet, dass**
der Korrosionsschutzkörper (1) hintergossen ist.

15. Geschützter Wandabschnitt einer Ofeninnenwand, insbesondere einer Kesselrohrwand (10), mit einem Schutzsystem nach einem der Ansprüche 12 bis 14.

## Claims

1. Corrosion protection body (1) for a protection system for a furnace inner wall (10) having a front face (1a) that can be turned towards the interior space of the furnace, a rear face (1b) and side faces (1c, 1d, 1e, 1f) that connect the front face (1a) with the rear face (1b),
wherein the corrosion protection body (1) comprises a base body (2) made of a first ceramic material, wherein a layer (3) of a second ceramic material is arranged on the front face of the base body (2), wherein the second ceramic material of the layer (3) has a lower porosity than the first ceramic material of the base body (2),
**characterized in that**
the ratio between the thickness of the layer (3) and the thickness of the base body (2) is in the range from 1:5 to 1:10.

2. Corrosion protection body (1) according to claim 1,
**characterized in that**
the ratio between the thickness of the layer (3) and the thickness of the base body (2) is 1:7.

3. Corrosion protection body (1) according to claim 1 or 2,
**characterized in that**
the first ceramic material contains an open-pore silicon carbide ceramic, in particular silicate-bonded silicon carbide, recrystallized silicon carbide (RSiC), or nitride- or oxynitride-bonded silicon carbide (NSiC),
and/or
the second ceramic material contains a dense silicon carbide ceramic, in particular reaction-bonded, silicon-infiltrated silicon carbide (SiSiC), sintered silicon carbide (SSiC) or hot (isostatically) pressed silicon carbide (HpSiC, HipSiC).

4. Corrosion protection body (1) according to any one of claims 1 to 3,
**characterized in that**
the base body (2) of the corrosion protection body (1) is formed as a plate.

5. Corrosion protection body (1) according to any one of claims 1 to 4,
**characterized in that**
the layer (3) arranged on the front face is constructed as a separate plate-like component (3) from the second ceramic material and bears against the base body (2).

6. Corrosion protection body (1) according to claim 5,
**characterized in that**
a positive connection, particularly a groove and tongue connection (2a, 3a) or an interlocking connection is provided between the plate-like component (3) that forms the layer and the base body (2).

7. Corrosion protection body (1) according to either of claims 5 or 6,
**characterized in that**
the plate-like component (3) that forms the layer and the base body (2) are connected via a mortar, particularly a silicon carbide mortar (4).

8. Corrosion protection body (1) according to any one of claims 5 to 7,
**characterized in that**
the plate-like component (3) that forms the layer at least partially projects beyond the lateral edges of the base body (2).

9. Corrosion protection body (1) according to any one of claims 1 to 8,
**characterized in that**
the rear face comprises means (2b) for connecting the corrosion protection body (1) to the inner wall of the furnace, particularly a boiler tube wall (10).

10. Corrosion protection body (1) according to claim 9,
**characterized in that**
the means have the form of at least one recess (2b) for receiving a hook element projecting from the inner wall of the furnace, particularly a groove ending at a side face of the main body, more particularly a T-groove (2b),
or
the means have the form of at least one hook element projecting from the rear face.

11. Corrosion protection body (1) according to claim 6 and claim 10,
**characterized in that**
the means (2b) for connecting the corrosion protection body (1) to the inner wall (10) of the furnace and the positive connection (2a, 3a) between the plate-like component (3) that forms the layer and the base body (2) are arranged with a lateral offset relative to one another.

12. Protection system for a furnace inner wall, particularly a boiler tube wall (10), having at least one corrosion protection body (1) according to any one of claims 1 to 11.

13. Projection system according to claim 12,
**characterized in that**
the corrosion protection body (1) is back-ventilated,
or
the corrosion protection body (1) is attached to the furnace inner wall by mortar.

14. Projection system according to claim 12,
**characterized in that**
the corrosion protection body (1) is back-cast.

15. Protected wall section of a furnace inner wall, particularly a boiler tube wall (10), having a protection system according to anyone of claims 12 to 14.

## Revendications

1. Corps de protection contre la corrosion (1) pour un système de protection d'une paroi intérieure de fourneau (10), avec une face avant (1a) qui doit être dirigée vers l'intérieur du fourneau, une face arrière (1b) et des faces marginales (1c, 1d, 1e, 1f) reliant la face avant (la) avec la face arrière (1b),
le corps de protection contre la corrosion (1) comprenant un corps de base (2) fabriqué dans une première matière céramique, sur la face avant du corps de base (2) étant placée une couche (3) d'une deuxième matière céramique, la deuxième matière céramique de la couche (3) faisant preuve d'une porosité moins importante que la première matière céramique du corps de base (2), **caractérisé en ce que** le rapport de l'épaisseur de la couche (3) à l'épaisseur du corps de base (2) est de 1:5 à 1:10.

2. Corps de protection contre la corrosion (1) selon la revendication 1,
**caractérisé en ce que**
le rapport de l'épaisseur de la couche (3) à l'épaisseur du corps de base (2) est de 1:7.

3. Corps de protection contre la corrosion (1) selon la revendication 1 ou la revendication 2,
**caractérisé en ce que**
la première matière céramique est une céramique de carbure de silicium à pores ouverts, notamment un carbure de silicium lié par silicate, un carbure de silicium recristallisé (RSiC) ou un carbure de silicium lié par nitrure ou par oxynitrure (NSiC),
et/ou
la deuxième matière céramique est une céramique de carbure de silicium dense, notamment un carbure de silicium infiltré de silicium (SiSic) lié par réaction, un carbure de silicium fritté (SSiC) ou un carbure de silicium pressé à chaud (de manière isostatique) (HpSiC, HipSiC).

4. Corps de protection contre la corrosion (1) selon l'une quelconque des revendications 1 à 3,
**caractérisé en ce que**
le corps de base (2) du corps de protection contre la corrosion (1) est conçu en forme de plaque.

5. Corps de protection contre la corrosion (1) selon l'une quelconque des revendications 1 à 4,
**caractérisé en ce que**
la couche (3) de deuxième matière céramique placée sur la face avant est conçue en tant qu'élément constitutif (3) séparé en forme de plaque et est adjacent au corps de base (2).

6. Corps de protection contre la corrosion (1) selon la revendication 5,
**caractérisé en ce**
**qu'**entre l'élément constitutif (3) en forme de plaque formant la couche et le corps de base (2), il est prévu une liaison par complémentarité de forme, notamment une liaison par rainure et languette (2a, 3a) ou une denture.

7. Corps de protection contre la corrosion (1) selon la revendication 5 ou la revendication 6,
**caractérisé en ce que** l'élément constitutif (3) en forme de plaque formant la couche et le corps de base (2) sont reliés au moyen d'un mortier, notamment d'un mortier au carbure de silicium (4).

8. Corps de protection contre la corrosion (1) selon l'une quelconque des revendications 5 à 7,
**caractérisé en ce que**
l'élément constitutif (3) en forme de plaque formant la couche saillit au moins en partie par-dessus les bords latéraux du corps de base (2).

9. Corps de protection contre la corrosion (1) selon l'une quelconque des revendications 1 à 8,
**caractérisé en ce que**
la face arrière comporte des moyens (2b) pour la liaison du corps de protection contre la corrosion (1) avec la paroi intérieure du fourneau, notamment avec une paroi tubulaire de chaudière (10).

10. Corps de protection contre la corrosion (1) selon la revendication 9,
**caractérisé en ce que**
les moyens sont conçus en tant qu'au moins un évidement (2b) destiné à recevoir l'un des éléments en crochet débordant de la paroi intérieure du fourneau, notamment en tant qu'une rainure qui se termine sur une face marginale du corps de base, spécialement en tant que rainure en T (2b)
ou
les moyens sont conçus en tant qu'au moins un élément en crochet débordant de la face arrière.

11. Corps de protection contre la corrosion (1) selon la revendication 6 et la revendication 10,
**caractérisé en ce que**
les moyens (2b) pour la liaison du corps de protection contre la corrosion (1) avec la paroi intérieure (10) du fourneau et la liaison (2a, 3a) par complémentarité de forme entre l'élément constitutif (3) en forme de plaque formant la couche et le corps de base (2) sont placés en étant latéralement décalés les uns par rapport aux autres.

12. Système de protection pour une paroi intérieure de fourneau, notamment pour une paroi tubulaire de chaudière (10) avec au moins un corps de protection contre la corrosion (1) selon l'une quelconque des revendications 1 à 11.

13. Système de protection selon la revendication 12, **caractérisé en ce que** le corps de protection contre la corrosion (1) est rétro-ventilé ou
le corps de protection contre la corrosion (1) est fixé au mortier sur la paroi intérieure du fourneau.

14. Système de protection selon la revendication 12,
**caractérisé en ce que**
le corps de protection contre la corrosion (1) est rétro-coulé.

15. Partie de paroi protégée d'une paroi intérieure de fourneau, notamment d'une paroi tubulaire de chaudière (10) avec un système de protection selon l'une quelconque des revendications 12 à 14.
